# EUROPÄISCHE PATENTSCHRIFT

(11) **EP 4 362 207 B1**
(45) Veröffentlichungstag und Bekanntmachung des Hinweises auf die Patenterteilung: **11.11.2026**
(21) Anmeldenummer: 22203861.4
(22) Anmeldetag: 26.10.2022
(51) Int. Cl.: H01M 10/04, H01M 50/533, H01M 50/627, H01M 50/566, H01M 50/543, H01M 50/548

(54) **VERFAHREN ZUM VERBINDEN VON EINEM ABLEITER MIT EINER POLKAPPE EINER BATTERIEZELLE**
METHOD OF JOINING A CONNECTOR TO A TERMINAL CAP OF A BATTERY CELL
PROCEDE DE RACCORDEMENT D'UN CONNECTEUR A UN CAPUCHON DE TERMINAL D'UNE CELLULE DE BATTERIE

(43) Veröffentlichungstag der Anmeldung: 01.05.2024
(73) Patentinhaber: Cellforce Group GmbH, 72138 Kirchentellinsfurt (DE)
(72) Erfinder: Gräf, Jürgen, 72072 Tübingen (DE)
(74) Vertreter: Müller Schupfner & Partner Patent- und Rechtsanwaltspartnerschaft mbB (Muc)

(56) Entgegenhaltungen:
- WO-A2-2018/143737
- DE-A1- 102008 010 810
- DE-A1- 102010 005 083

## Beschreibung

Die Erfindung betrifft ein Verfahren zum Verbinden von einem Ableiter mit einer Innenseite einer Polkappe einer elektrochemischen Zelle.

Bei der Herstellung von elektrochemischen Speichern, wie beispielsweise einer Lithium-Ionen-Batterien, werden üblicherweise mehrere, einander abwechselnde, Lagen von Anoden, Kathoden und Separatoren in Form von Zellstacks angeordnet. Die jeweiligen Anoden und Kathoden werden durch jeweils einen Ableiter elektrisch kontaktiert. Bei der Verwendung von zwei Zellstacks werden beispielsweise U-förmige Ableiter verwendet, bei welchen die beiden Enden zu den zwei Zellstacks und die Stirnseite zu einer Innenseite einer Polkappe gerichtet ist. Die Ableiter fungiert als eine elektrische Schnittstelle zwischen den Zellstacks und den Polkappen.

Durch die beidseitige bzw. gegenüberliegende Anordnung von Polkappen kann die erste Polkappe regulär bzw. ohne technische Herausforderungen mit dem Ableiter des Zellstacks verschweißt oder verlötet werden. Die zweite Polkappe kann nicht mehr direkt mit dem Ableiter verbunden werden. Hierfür müssen längere Verbindungsleitungen zwischen dem zweiten Ableiter und dem Zellstack bereitgestellt werden, wodurch ein zusätzliches Gehäusevolumen für die montagebedingt längeren Verbindungsleitungen notwendig ist.

DE 10 2010 005 083 A1 beschreibt ein Verfahren zum Verbinden eines Verbindungselements mit einer Zellgehäusewandung, wobei die Zellgehäusewandung und das Verbindungselement Öffnungen aufweisen, die in Überlagerung gebracht werden. Ein zweiteiliges Halterungselement mit inneren Auflageflächen wird durch die Öffnungen hindurchgeschoben und kann nach einem Spreizen mittels der inneren Auflageflächen das Verbindungselement gegen die Zellgehäusewandung ziehen. Weiterer Stand der Technik ist aus DE 10 2008 010810 A1 und WO 2018/143737 A2 bekannt.

Die vorliegende Erfindung hat daher die Aufgabe, ein Verfahren zum Verbinden eines Ableiters, insbesondere eines zweiten zu verbindenden Ableiters, zu schaffen, bei dem das Volumen des Zellgehäuses minimiert wird. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Verbinden von einem Ableiter mit einer Innenseite einer Polkappe einer elektrochemischen Zelle bereitgestellt. In einem Schritt wird ein endseitig spreizbarer Zugdorn durch eine Öffnung, wie beispielsweise Befüllöffnung, der Polkappe und durch eine korrespondierende Öffnung oder Ausnehmung des Ableiters hindurch geschoben. Der Zugdorn wird endseitig im Bereich der Öffnung oder Ausnehmung des Ableiters gespreizt, um eine temporäre mechanische Verbindung zwischen dem Zugdorn und dem Ableiter auszubilden. In einem weiteren Schritt wird auf den Zugdorn eine aus der Befüllöffnung der Polkappe hinaus gerichtet Kraft eingestellt. Hierdurch wird der Ableiter gegen die Innenseite der Polkappe gepresst. Durch das Pressen des Ableiters gegen die Innenseite der Polkappe kann ein initialer Spalt zwischen der Innenseite der Polkappe und dem Ableiter eliminiert werden, wodurch eine optimale Vorbereitung für einen nachfolgenden Fügeschritt umgesetzt wird. Anschließend wird in dem Fügeschritt der Ableiter mit der Polkappe, insbesondere elektrisch leitend, verbunden.

Erfindungsgemäß wird die mechanische Verbindung zwischen dem Zugdorn und dem Ableiter durch eine rotatorische Bewegung und/oder eine translatorische Bewegung des Zugdorns ausgebildet. Hierdurch kann der Zugdorn durch die Öffnung hindurch geschoben und mittels einer Drehbewegung oder seitlich gerichteten Bewegung bzw. Schwenkbewegung den Ableiter derart hinterhaken, dass dieser gegen die Innenseite der Polkappe pressbar ist. Ein derartiger Zugdorn kann ebenfalls technisch besonders einfach realisiert und in einen automatisierten Prozess integriert werden.

Durch das Verfahren kann ein sogenannter Nullspalt zwischen der Polkappe und dem Ableiter eingestellt werden, um eine prozesssichere Verbindung zwischen der Polkappe und dem Ableiter umzusetzen. Insbesondere kann durch das Verfahren der Ableiter gegen die Polkappe von außen gezogen bzw. gedrückt werden ohne eine schädigende Krafteinwirkung auf den mindestens einen Zellstack auszuüben, welcher mit dem Ableiter verbunden ist.

Des Weiteren kann mittels des Verfahrens der Bedarf an zusätzlichem Zellvolumen minimiert werden, da keine zusätzliche Länge für die Verbindung zwischen dem Ableiter und dem Zellstack erforderlich ist.

Gemäß einem Beispiel wird der Zugdorn endseitig mechanisch oder durch Überdruck, insbesondere pneumatisch oder hydraulisch, oder durch Unterdruck gespreizt, um eine mechanische Verbindung zwischen dem Zugdorn (30) und dem Ableiter auszubilden. Hierdurch kann der Zugdorn endseitig vielseitig vergrößert werden, um den Ableiter zu arretieren und somit zumindest entlang einer Richtung gegenüber dem Zugdorn unbeweglich zu fixieren. Je nach Ausgestaltung kann der Zugdorn den Ableiter hinterhaken oder eine temporäre feste Verbindung mit dem Ableiter eingehen, um den Ableiter gegen die Polkappe bewegen zu können. Somit kann der Zugdorn in einer Öffnung oder Ausnehmung des Ableiters vergrößert bzw. expandiert werden oder hinter bzw. unterhalb der Öffnung, um den Ableiter entlang zumindest einer Richtung bewegen zu können.

Insbesondere kann der Zugdorn dazu eingerichtet sein, den Ableiter zu ziehen und somit gegen eine Innenseite der Polkappe zu pressen bzw. zu bewegen.

Nach einem weiteren Beispiel weist der Zugdorn einen äußeren Rohrabschnitt auf, welcher einen endseitigen Spreizabschnitt aufweist. Vorzugsweise wird der Spreizabschnitt durch ein Beaufschlagen des Rohrabschnitts mit Überdruck zumindest bereichsweise vergrößert. Hierdurch kann der Zugdorn technisch einfach endseitig expandiert werden. Dabei kann der Spreizabschnitt zumindest bereichsweise elastisch ausgestaltet sein, um die Abmessung des Zugdorns quer zur Zugrichtung des Ableiters zu vergrößern oder zu verkleinern.

Der Zugdorn kann gemäß einem weiteren Beispiel technisch besonders einfach ausgestaltet sein, wenn der Spreizabschnitt ein Spreizelement aufweist und das Spreizelement mechanisch oder durch Unterdruck in den äußeren Rohrabschnitts gezogen wird, um den Spreizabschnitt zumindest bereichsweise zu vergrößern. Entsprechend kann das Spreizelement durch mechanische Einwirkung oder durch Überdruck vom äußeren Rohrabschnitt beabstandet werden, um den Spreizabschnitt erneut zu verkleinern. Je nach Ausgestaltung kann eine Rückstellfeder vorgesehen sein, welche das Spreizelement automatisiert vom äußeren Rohrabschnitt entlang der Zugrichtung des Zugdorns beabstanden kann, um den Spreizabschnitt zu verkleinern.

Der Spreizabschnitt kann durch das Spreizelement entlang zumindest einer Raumrichtung quer zur Zugrichtung des Zugdorns vergrößern. Je nach Ausgestaltung kann das Spreizelement rotationssymmetrisch ausgestaltet sein, wodurch eine gleichmäßige Vergrößerung des Spreizabschnitts umsetzbar ist.

Nach einer weiteren Ausführungsform weist der Zugdorn einen Aufnahmeabschnitt und einen Mitnehmer auf. Der Aufnahmeabschnitt ist dazu eingerichtet seitlich einen Teil des Ableiters aufzunehmen. Vorteilhafterweise kann der Mitnehmer über den Aufnahmeabschnitt hinausragen, wodurch ein Hinterhaken des Ableiters realisiert wird. Der Aufnahmeabschnitt und der Mitnehmer können exzentrisch gegenüber einer Drehachse des Zugdorns geformt sein.

Beispielsweise kann der Zugdorn durch die Öffnung geschoben werden, bis der Ableiter und die Polkappe auf einer gemeinsamen Höhe des Aufnahmeabschnitts sind. Ein optionales Begrenzungselement des Zugdorns kann die erforderliche Eintauchtiefe des Zugdorns durch die Öffnung hindurch begrenzen bzw. regeln. Der Mitnehmer fungiert als Konterfläche bzw. Auflagefläche für den Ableiter.

Je nach Ausgestaltung können der Aufnahmeabschnitt und der Mitnehmer des Zugdorns eine Schraubenform bzw. Gewindeform ausbilden. Somit kann ein in die Öffnung eingesetzter Zugdorn rotiert werden, wobei durch die Rotation entlang der Rotationsachse des Zugdorns die effektive Position des Mitnehmers in Richtung der Innenseite der Polkappe wandert und somit den Ableiter und die Polkappe zusammenpresst. Dies kann alternativ auch durch ein Gewinde des Zugdorns außerhalb der elektrochemischen Zelle realisiert werden, welches durch eine Rotation von zumindest einem Teil des Zugdorns die axiale Position bzw. Tiefenposition des Zugdorns verändert.

Ein Aktuator kann die rotatorische und/oder translatorische Bewegung des Zugdorns umsetzen. Optional können Signale bzw. Messdaten von Sensoren und/oder Endanschlägen für ein definiertes Anpressen des Ableiters an die Innenseite der Polkappe herangezogen werden. Eine Steuereinheit kann die Koordination zwischen den Sensoren bzw. Endanschlägen oder Endkontakten und den Aktuatoren umsetzen.

Analog hierzu kann die Steuereinheit auch die Beaufschlagung des Zugdorns mit Unterdruck oder Überdruck steuern. Dabei können weitere Sensoren, wie beispielsweise Drucksensoren und dergleichen für eine gezielte Steuerung des Zugdorns verwendet werden.

Gemäß einem weiteren Ausführungsbeispiel wird der Ableiter formschlüssig oder stoffschlüssig oder reibschlüssig mit der Polkappe verbunden. Beispielsweise kann der Ableiter durch Laser-Schweißen, Tab-Anschweißen, sogenanntes E-Filling, Vernieten, Verkanten, Verpressen und dergleichen mit der Polkappe verbunden werden. Hierdurch kann die elektrisch leitfähige Verbindung zwischen der Polkappe und dem Ableiter vielseitig realisiert werden.

Des Weiteren kann eine Lochschweißung, beispielsweise in Form von Laser-Schweißen, durch die Polkappe und/oder im Bereich der Öffnung der Polkappe umgesetzt werden.

Das Verkanten oder Verpressen des Ableiters kann beispielsweise durch ein Einkerben oder Verformen der Polkappe in mindestens einem seitlichen Abschnitt erfolgen. Dies wird insbesondere durch eine zumindest bereichsweise plastische Verformung der Polkappe erreicht und resultiert in einer mechanischen Verbindung zwischen der Polkappe und dem Ableiter. Hierfür kann die Polkappe innenseitig den Ableiter umgreifen, um einen elektrischen Kontakt auch an Seitenwänden der Polkappe und des Ableiter ausbilden zu können.

Nach einer weiteren Ausführungsform weist die Polkappe mindestens eine Verbindungsöffnung auf. Bevorzugterweise wird durch die mindestens eine Verbindungsöffnung eine Linienschweißung oder eine Lochschweißung oder eine Lötverbindung eingebracht, um eine stoffschlüssige Verbindung zwischen dem Ableiter und der Polkappe auszubilden. Durch diese Maßnahme kann die Ausbildung einer stoffschlüssigen Verbindung zwischen der Polkappe und dem Ableiter sichergestellt werden. Darüber hinaus kann die Ausbildung einer derartigen Verbindung zuverlässig im Rahmen eines Qualitätsmanagements überprüft werden.

Das Verfahren kann in einer automatisierten Fertigung von Zellen bzw. Batteriezellen eingesetzt werden, wenn nach dem Verbinden des Ableiters mit der Polkappe, der Zugdorn aus der Befüllöffnung entfernt und die Befüllöffnung zum Befüllen eines Elektrolyts verwendet wird.

Insbesondere können mehrere parallel verwendete Zugdornen gleichzeitig mehrere Ableiter arretieren und gegen mehrere Polkappen innenseitig pressen. Die jeweiligen Polkappen und Ableiter können dann gleichzeitig durch mehrere parallele Verbindungen elektrisch leitend gekoppelt werden. Dies resultiert in einer optimalen Skalierbarkeit des Verfahrens für eine schnelle Serienfertigung von Batteriezellen.

Nach dem erneuten Verkleinern der Spreizabschnitte der Zugdornen können diese aus den Öffnungen oder Befüllöffnungen herausgezogen werden, um ein darauf folgendes befüllen der Zellen zu ermöglichen. Durch diese Maßnahme kann die Befüllöffnung für mehrere Aufgaben, das Anziehen des Ableiters und das Befüllen der Zelle, eingesetzt werden.

Bei einer weiteren Ausführungsform wird die Befüllöffnung nach dem Befüllen mit dem Elektrolyt fluiddicht verschlossen. Dieser Schritt des Verfahrens kann beispielsweise durch ein Einsetzen eines Stopfens bzw. Blindstopfens oder durch ein stoffschlüssiges Verschließen der Befüllöffnung technisch einfach realisiert werden.

Das Befüllen der Zellen kann besonders schnell erfolgen, wenn im Vorfeld ein Vakuum bzw. ein Unterdruck im Innenvolumen der Zelle erzeugt wird.

Gemäß einer weiteren Ausführungsform wird der Zugdorn endseitig im Bereich einer als Sackloch oder als Strangpress-Profil ausgestalteten Ausnehmung des Ableiters gespreizt, um diesen mechanisch zu koppeln. Durch diese Maßnahme können kosteneffiziente Strangpress-Profile verwendet werden, welche auf die Maße der Polkappen zugeschnitten sind. Die Herstellung der Ableiter kann somit technisch besonders einfach ausgestaltet sein.

Das Verwenden von Sacklöchern und von Vertiefungen bzw. Nuten von Strangpress-Profilen kann ein zeitgleiches Heranziehen des Ableiters an die Polkappe und das Befüllen der Zelle mit einer Elektrolytlösung ermöglichen.

Der Ableiter kann technisch besonders einfach mit der Polkappe elektrisch verbunden werden, wenn der Ableiter zumindest einen seitlichen Verbindungsabschnitt aufweist, welcher im Wesentlichen mit einer Innenkontur der Polkappe im Bereich der Innenseite korrespondiert. Dabei wird der Ableiter durch ein plastisches Verformen der Polkappe im Bereich des Verbindungsabschnitts mit der Polkappe verbunden. Beispielsweise kann ein außenseitiges Einkerben oder Eindrücken der Polkappe im Bereich des Verbindungsabschnitts eine elektrisch leitfähige Verbindung zwischen der Polkappe und dem Ableiter herstellen.

Der Ableiter kann technisch besonders einfach mit der Polkappe elektrisch leitfähig verbunden werden, wenn der Ableiter mittels einer Durchschweißung durch die Polkappe hindurch mit der Polkappe zumindest bereichsweise verbunden wird. Beispielsweise kann ein an die Innenseite der Polkappe durch den Zugdorn angezogener bzw. angepresster Ableiter mit Hilfe von Laserschweißen stoffschlüssig entlang der eingebrachten Durchschweißung verbunden werden.

Alternativ oder zusätzlich kann eine randseitige Schweißverbindung zwischen dem Ableiter und der Polkappe im Bereich von Kanten der Öffnungen oder Befüllöffnungen ausgebildet werden.

Nachstehend werden mehrere Ausführungsbeispiele der Erfindung anhand der Zeichnungen näher erläutert. Es zeigen:
Fig. 1 eine schematische Schnittdarstellung einer Batteriezelle mit zwei parallel angeschlossenen Zellstacks und gegenüberliegend angeordneten Polkappen,
Fig. 2 eine Detailansicht A aus Fig. 1 zum Veranschaulichen eines Verfahrens gemäß einem ersten Beispiel,
Fig. 3 eine Detailansicht zum Veranschaulichen eines mittels einer Durchschweißung mit einer Polkappe verbundenen Ableiters,
Fig. 4 eine Detailansicht zum Veranschaulichen eines mittels einer Lochschweißung mit einer Polkappe verbundenen Ableiters,
Fig. 5 eine Draufsicht auf eine Polkappe der in Fig. 1 gezeigten Batteriezelle,
Fig. 6 Detailansichten einer Batteriezelle mit einem als Strangpress-Profil ausgestalteten Ableiter,
Fig. 7 Detailansichten einer Batteriezelle zum Veranschaulichen einer Verbindung eines Ableiters mit einer Polkappe durch plastische Verformung, und
Fig. 8 schematische Detailansichten zum Veranschaulichen eines Verfahrens gemäß einer zweiten erfindungsgemäßen Ausführungsform.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

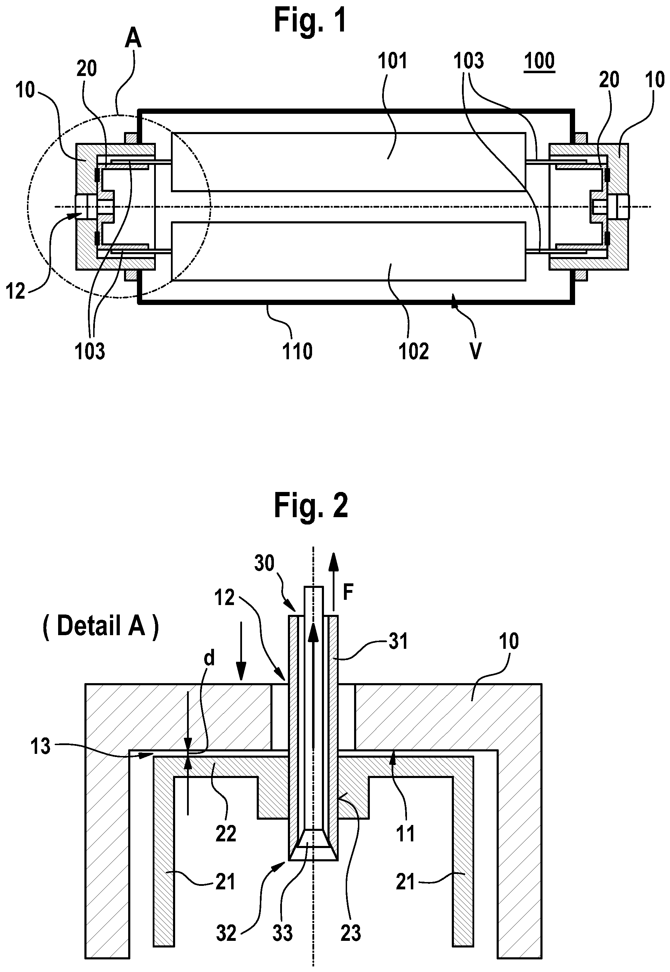

Die Fig. 1 zeigt eine schematische Schnittdarstellung einer elektrochemischen Zelle bzw. Batteriezelle 100 mit zwei parallel angeschlossenen Zellstacks 101, 102 und gegenüberliegend angeordneten Polkappen 10. Die Batteriezelle 100 weist eine beidseitige bzw. gegenüberliegende Anordnung von Polkappen 10. In dem Zellgehäuse 110 sind zwei Zellstacks 101, 102 angeordnet, welche jeweils stirnseitig über Verbindungsleitungen 103 mit einem Ableiter 20 elektrisch leitfähig verbunden sind. Das Zellgehäuse 110 kann beispielsweise einen rechteckigen oder quadratischen Querschnitt aufweisen und stirnseitig direkt oder indirekt durch die Polkappen 10 verschließbar sein, um eine Elektrolytlösung aufzunehmen.

Zum Einbringen der Elektrolytlösung in ein Gehäusevolumen V der Batteriezelle 100 ist mindestens eine Befüllöffnung 12 vorgesehen, die sich durch mindestens eine Polkappe 10 hindurch erstreckt.

Die Ableiter 20 sind im dargestellten Ausführungsbeispiel als U-förmige Ableiter ausgestaltet und weisen zwei Schenkel 21 auf, welche jeweils einen Zellstack 101, 102 elektrisch kontaktieren. Die Schenkel 21 der Ableiter 20 sind durch einen Quersteg 22 miteinander verbunden. Der Quersteg 22 wird hierbei mit einer Innenseite 11 der Polkappe 10 elektrisch leitend verbunden, sodass die Zellstacks 101, 102 mit den Polkappen 10 elektrisch leitend ausgestaltet sind. Diese Details sind beispielsweise in der Fig. 2 veranschaulicht.

Ein erster Ableiter 20 kann technisch einfach mit einer ersten Polkappe 10 elektrisch leitend verbunden werden. Ein anschließendes Verbinden eines zweiten Ableiters 20 mit einer zweiten Polkappe 10 erfordert jedoch zusätzliche Maßnahmen, die im Folgenden näher beschrieben werden. Zum Vermeiden von internen Beschädigungen der Batteriezelle 100 darf keine direkte Krafteinwirkung auf die Zellstacks 101, 102 erfolgen.

Für eine zuverlässige elektrische Verbindung zwischen dem Ableiter 20 und der Polkappe 10 muss ein initialer Spalt 13 mit einem Abstand d zwischen der Innenseite 11 der Polkappe 10 und dem Ableiter 20 eliminiert und ein sogenannter Nullspalt ausgebildet werden. In der Fig. 2 ist eine Detailansicht A aus Fig. 1 zum Veranschaulichen eines Verfahrens gemäß einer erfindungsgemäßen Ausführungsform gezeigt, welches auch eine Möglichkeit beschreibt, den Nullspalt auszubilden. Der Übersicht halber sind die internen Komponenten, wie die Zellstacks 101, 102 und die Verbindungsleitungen 103, in der Fig. 2 und den folgenden Figuren nicht dargestellt.

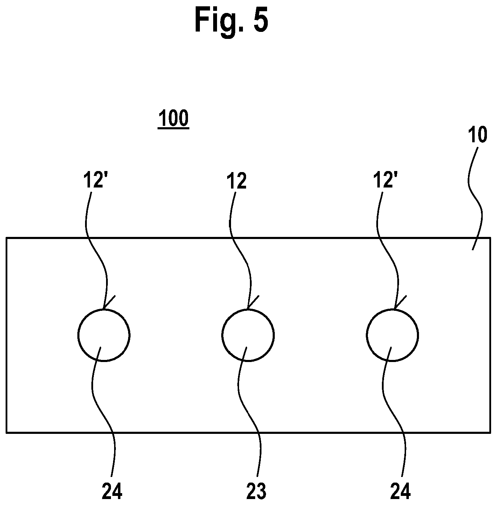

In einem Schritt eines beispielhaften Verfahrens wird ein endseitig spreizbarer Zugdorn 30 durch eine Öffnung 12 der Polkappe 10 hindurch geschoben. Im dargestellten Ausführungsbeispiel ist die Öffnung 12 als eine Befüllöffnung zum Einleiten einer Elektrolytlösung in das Gehäusevolumen V ausgestaltet. Der Zugdorn 30 wird darüber hinaus auch durch eine der Öffnung 12 korrespondierende Öffnung 23 oder Ausnehmung 24 des Ableiters 20 hindurch bzw. hinein geschoben. Ein Ableiter 20 mit einer derartigen Ausnehmung 24 ist beispielsweise in der Fig. 5 illustriert.

Der Zugdorn 30 wird anschließend endseitig im Bereich der Öffnung 23 oder Ausnehmung 24 des Ableiters 20 gespreizt, um eine temporäre mechanische Verbindung zwischen dem Zugdorn 20 und dem Ableiter 20 auszubilden.

In einem weiteren Schritt wird auf den Zugdorn 30 eine aus der Öffnung 12 der Polkappe 10 hinaus gerichtet Kraft F eingestellt. Hierdurch wird der Ableiter 20 gegen die Innenseite 11 der Polkappe 10 gepresst.

Durch das Pressen des Ableiters 20 gegen die Innenseite 11 der Polkappe 10 wird der initiale Spalt 13 zwischen der Innenseite 11 der Polkappe 10 und dem Ableiter 20 eliminiert, sodass eine optimale Vorbereitung für einen nachfolgenden Fügeschritt realisiert wird. Anschließend wird in dem Fügeschritt der Ableiter 20 mit der Polkappe 10 elektrisch leitend und vorzugsweise auch mechanisch verbunden.

Der Zugdorn 30 weist einen äußeren Rohrabschnitt 31 und einen endseitigen Spreizabschnitt 32 auf. Im dargestellten Ausführungsbeispiel ist in dem Spreizabschnitt 32 ein Spreizelement 33 angeordnet. Das Spreizelement 33 ist konisch in Richtung der Kraft F sich verjüngend ausgestaltet und kann durch eine mechanische Betätigung oder durch einen Unterdruck derart in den Rohrabschnitt gezogen werden, dass der endseitige Spreizabschnitt eine Querschnittsvergrößerung erlangt. Der Pfeil im Rohrabschnitt 31 veranschaulicht schematisch die Bewegung des Spreizelements 33. Diese Querschnittsvergrößerung resultiert in einer Arretierung des Spreizabschnitts 32 mit der Öffnung 23 des Ableiters 20.

Die Arretierung kann als eine Einschränkung der Beweglichkeit des Ableiters 20 durch einen zumindest bereichsweisen Formschluss des Spreizabschnitts 32 ausgestaltet sein. In der Fig. 2 erfolgt beispielsweise ein Hinterhaken des Spreizabschnitts 32 unterhalb der Öffnung 23 des Ableiters 20, um den Ableiter 20 gegen die Innenseite 11 der Polkappe 10 ziehen zu können.

Durch das Beaufschlagen des Ableiters 20 mit der Kraft F wird zeitgleich keine Kraft auf die Zellstacks 101, 102 ausgeübt. Vorzugsweise erfolgt durch die Verbindungsleitungen 103 eine Entkopplung zwischen den Zellstacks 101, 102 und dem Ableiter 20. Hierfür können die Verbindungsleitungen 103 beispielsweise geringfügig länger ausgestaltet sein als ein Abstand zwischen den Schenkeln 21 des Ableiters 20 und den Stirnseiten der Zellstacks 101, 102.

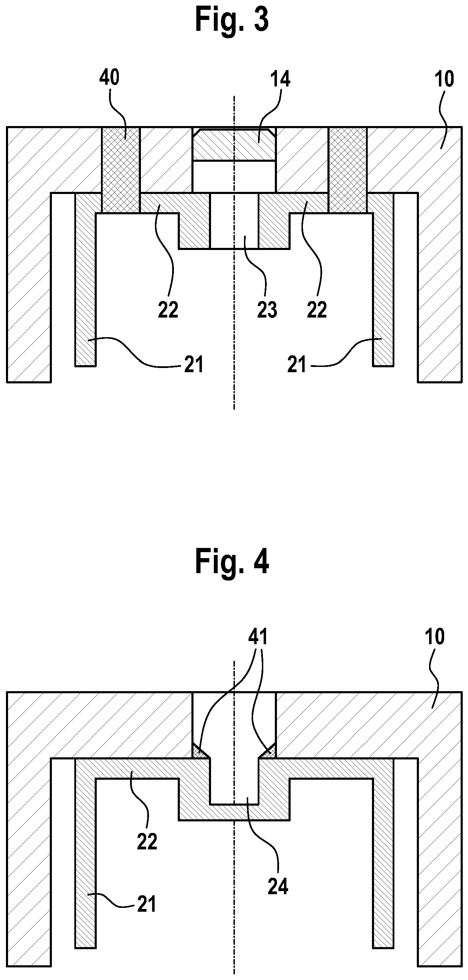

Die Fig. 3 zeigt eine Detailansicht zum Veranschaulichen eines mittels einer Durchschweißung 40 mit einer Polkappe 10 verbundenen Ableiters 20. Eine alternative oder zusätzliche Möglichkeit einer stoffschlüssigen Verbindung zwischen der Polkappe 10 und dem Ableiter 20 ist in der Fig. 4 gezeigt, die eine Detailansicht zum Veranschaulichen eines mittels einer Lochschweißung 41 mit einer Polkappe 10 verbundenen Ableiters 20 darstellt.

Eine oder mehrere Durchschweißungen 40 werden beispielsweise durch Laserschweißen erzeugt. Nach dem Einstellen des Nullspalts zwischen dem Ableiter 20 und der Polkappe kann außenseitig auf der Stirnseite der Polkappe 10 eine nicht dargestellte Schweißvorrichtung angesetzt und zumindest bereichsweise betätigt werden.

Eine Durchschweißung 40 kann beispielsweise punktförmig, linienförmig und/oder eine geschlossene Fläche auf der Polkappe 10 umschließen. Aufgrund der relativ geringen Materialstärke der Polkappe 10 wird der hinter der Polkappe 10 angeordnete Quersteg 22 des Ableiters 20 ebenfalls geschmolzen und somit stoffschlüssig mit der Polkappe 10 verbunden.

Eine Lochschweißung 41 kann beispielsweise randseitig der Befüllöffnung 12 oder im Bereich einer Verbindungsöffnung 12' erfolgen (s. Fig. 5). Dabei wird ein Randbereich der Befüllöffnung 12 durch ein Schweißverfahren geschmolzen, um die Polkappe 10 mit dem Ableiter 20 zu verbinden. Hierdurch bleibt noch ein Fluidkanal, um die Batteriezelle 100 mit der Elektrolytlösung zu befüllen.

Werden, wie in Fig. 5 angedeutet, weitere Öffnungen bzw. Verbindungsöffnungen 12' verwendet, können diese dazu eingesetzt werden, einen Schweißpunkt, beispielsweise mittels Laserschweißen, zu setzen und somit die Verbindungsöffnung 12' vollständig zu verschließen. Eine entsprechende Verbindungsöffnung 12' kann vorzugsweise als ein Sackloch ausgestaltet sein. Dabei ist hinter der Öffnung 12' in der Polkappe 10 eine Ausnehmung bzw. Vertiefung 24 des Ableiters 20 oder der Quersteg 22 des Ableiters 20 positioniert.

Weiterhin wird in der Fig. 4 eine Detailansicht zum Veranschaulichen eines mittels einer Lochschweißung mit einer Polkappe 10 verbundenen Ableiters 20 dargestellt, bei dem der Ableiter 20 nicht an einer korrespondierenden Öffnung 23, sondern an einer Vertiefung oder Ausnehmung 24 durch den Zugdorn 30 an die Innenseite 11 der Polkappe 10 gezogen werden kann. Eine stoffschlüssige Verbindung zwischen der Vertiefung 24 und der Polkappe 10 ist besonders fluiddicht ausgestaltet und erfordert keine zusätzlichen Verschlüsse 14 (s. Fig. 3). Die Befüllöffnung 12, 23 erfordert nach dem Befüllen der Batteriezelle 100 hingegen einen Verschluss 14.

Der Verschluss 14 kann ein reversibler oder ein irreversibler Verschluss sein, welcher ein erneutes Öffnen des Gehäusevolumens V ermöglicht oder die Batteriezelle 100 endgültig versiegelt. Beispielsweise kann der Verschluss 14 als ein Stopfen, als ein Schraubverschluss, als ein Schmelzverschluss und dergleichen ausgestaltet sein.

Bei einer alternativen oder zusätzlichen Ausgestaltung kann die Vertiefung 24 ein Innengewinde aufweisen, sodass, alternativ zu einer Schweißverbindung, eine Schraubverbindung mittels einer, nicht dargestellten, Schraube zwischen der Polkappe 10 und dem Ableiter 20 ausbildbar ist.

Die Vertiefung 24 bzw. Ausnehmung kann durch Materialabtrag oder durch ein Umformverfahren, wie beispielsweise Stanzen, in den Quersteg 22 des Ableiters 20 hergestellt werden. Dabei können zeitgleich auch die Schenkel 21 des Ableiters 20, beispielsweise mit einem Stanz- bzw. Umformschritt, ausgebildet werden.

Die Fig. 5 zeigt eine Draufsicht auf eine Polkappe 10 der in Fig. 1 gezeigten Batteriezelle 100. Dabei weist die Polkappe 10 eine mittig angeordnete Befüllöffnung 12 und zwei Öffnungen 12', welche über Vertiefungen 24 des Ableiters 20 angeordnet sind. Die Befüllöffnung 12 ist über einer korrespondierenden Öffnung 23 des Ableiters 20 angeordnet und bildet einen Fluidkanal zum Gehäusevolumen V der Batteriezelle 100.

Im dargestellten Ausführungsbeispiel können beispielsweise die als Sacklöcher ausgestalteten Öffnungen 12' zum Ausbilden einer Verbindung zwischen der Polkappe 10 und dem Ableiter 20 fungieren. Damit die eingebrachte Schweißnaht oder Schweißpunkt einen möglichst minimalen Überstand aufweist, kann die Polkappe 10 eine nicht dargestellte Vertiefung oder Phasung im Bereich der Öffnungen 12' aufweisen.

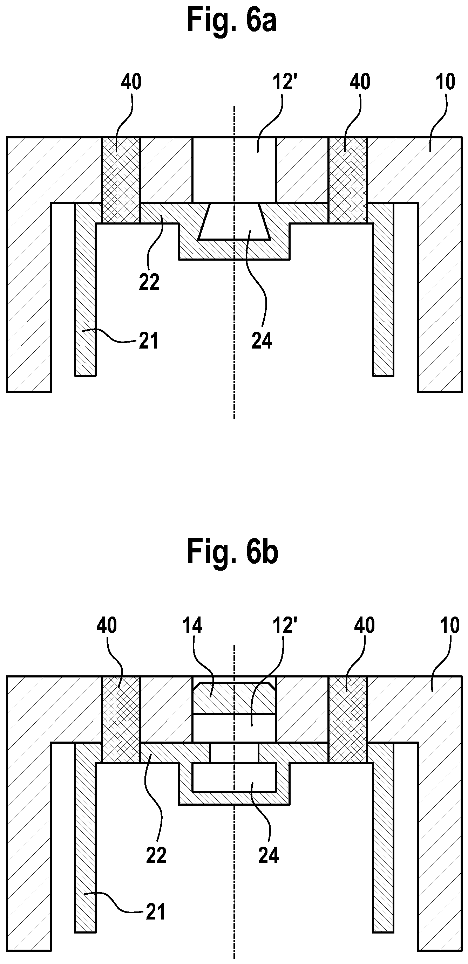

In der Fig. 6a und Fig. 6b sind Detailansichten einer Batteriezelle 100 mit einem als Strangpress-Profil ausgestalteten Ableiter 20 dargestellt. Dabei zeigt die Fig. 6a einen Ableiter 20, welcher aus einem Strangpress-Profil mit einer V-förmigen Ausnehmung bzw. Vertiefung 24. Im Vergleich hierzu ist in der Fig. 6b die Vertiefung 24 T-förmig ausgestaltet.

Die entsprechenden Vertiefungen 24 erstrecken sich über eine gesamte Länge des Ableiters 20 entlang einer Raumrichtung. Der Quersteg 22 des Ableiters 20 wird durch die Vertiefung 24 unterbrochen bzw. weist die Vertiefung 24 auf. Derartige Ableiter 20 können technisch besonders einfach hergestellt werden, wobei vorgefertigte Strangpress-Profile auf eine vordefinierte Länge gesägt werden.

Aufgrund der sich über die gesamte Länge oder Breite des Ableiters 20 erstreckende Vertiefung 24 wird zwar mit der Öffnung 12' der Polkappe 10 ein Sackloch ausgebildet, jedoch ist ein zusätzlicher Verschluss 14 vorteilhaft, um eine Leckage der Elektrolytlösung zu vermeiden. Diese Ausgestaltung ist in der Fig. 6b schematisch illustriert.

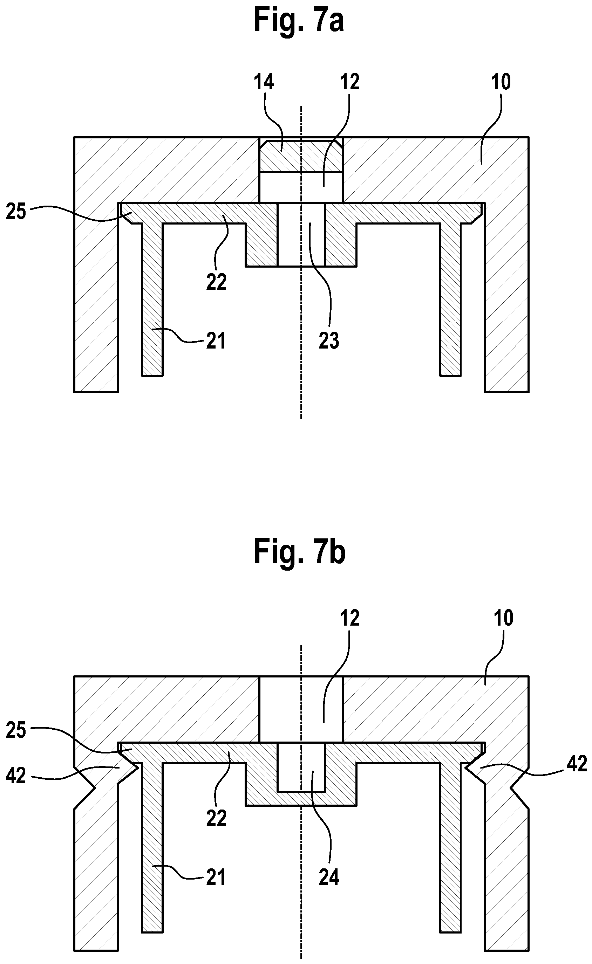

Die Fig. 7a und die Fig. 7b zeigen Detailansichten einer Batteriezelle 100 zum Veranschaulichen einer Verbindung eines Ableiters 20 mit einer Polkappe 10 durch plastische Verformung 42. Für eine derartige elektrisch leitfähige Verbindung zwischen der Polkappe 10 und dem Ableiter 20 weist der Ableiter 20 zumindest einen seitlichen Verbindungsabschnitt 25 auf. Im dargestellten Ausführungsbeispiel sind an zwei gegenüberliegenden Seiten bzw. Kanten des Ableiters 20 in einem Übergangsbereich zwischen jeweils einem Schenkel 21 und dem Quersteg 22 ein Verbindungsabschnitt 25 angeordnet, welcher beispielhaft als eine seitliche Verlängerung des Querstegs 22 ausgebildet ist.

Die seitlichen Verbindungsabschnitte 25 korrespondieren im Wesentlichen mit einer seitlichen Innenkontur der Polkappe 10. In der Fig. 7b wird die plastische Verformung der Polkappe 10 im Bereich der Verbindungsabschnitte 25 veranschaulicht. Dies erfolgt beispielsweise durch ein außenseitiges Einkerben oder Eindrücken der Polkappe 10 im Bereich der Verbindungsabschnitte 25 bzw. unterhalb der Verbindungsabschnitte 25, wodurch eine elektrisch leitfähige Verbindung zwischen der Polkappe 10 und dem Ableiter 20 entsteht.

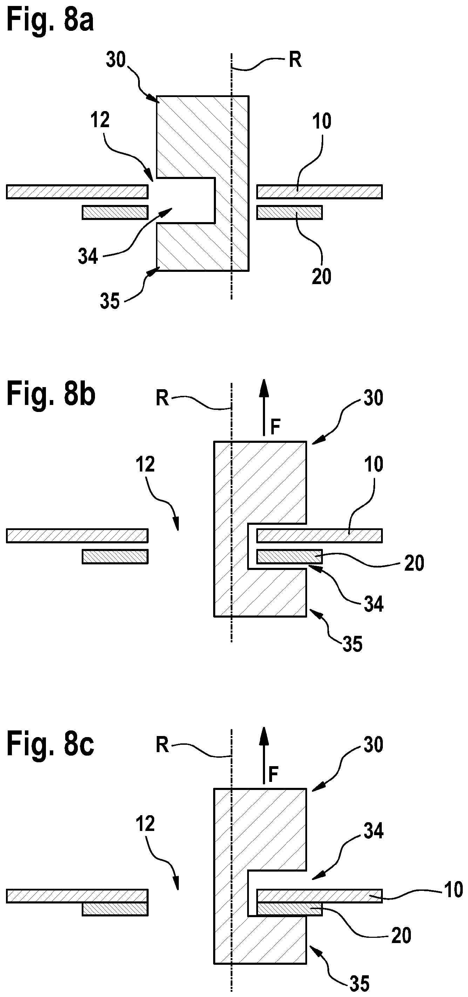

In der Fig. 8a, Fig. 8b und Fig. 8c sind schematische Detailansichten zum Veranschaulichen eines Verfahrens gemäß einer erfindungsgemäßen Ausführungsform gezeigt. Im Unterschied zum in Fig. 2 gezeigten Zugdorn 30 wird bei diesem Ausführungsbeispiel ein Zugdorn 30 illustriert, welcher durch eine rotatorische Bewegung und/oder eine translatorische Bewegung des Zugdorns 30 eine mechanische Wirkverbindung zum Ableiter 20 ausbilden kann, um diesen innenseitig gegen die Polkappe 10 ziehen zu können.

Der Einfachheit halber ist der dargestellte Zugdorn 30 um eine Rotationsachse R drehbar ausgestaltet und weist einen exzentrisch geformten Aufnahmeabschnitt 34 und Mitnehmer 35 auf. Der Aufnahmeabschnitt 34 ist als eine Aussparung ausgestaltet und der Mitnehmer 35 begrenzt endseitig den Aufnahmeabschnitt 34. Dabei fungiert der Mitnehmer 35 als eine Auflagefläche für den Ableiter 20. Nach dem Einsetzen des Zugdorns 30 in die Öffnung 12 befindet sich der Aufnahmeabschnitt 34 auf einer gemeinsamen axialen Höhe bzw. Tiefe mit dem Ableiter 20 und der Polkappe 10. Dieser Schritt ist in der Fig. 8a gezeigt.

In einem anschließenden Schritt, welcher durch die Fig. 8b veranschaulicht ist, wird der Zugdorn 30 entlang der Rotationsachse R, beispielsweise um 90° bis 180° gedreht, wodurch der Mitnehmer 35 den Ableiter 20 hinterhaken kann. Der Ableiter 20 und die Polkappe 10 ragen somit in den Aufnahmeabschnitt hinein.

Ein anschließendes Herausziehen des Zugdorns 30 aus der Öffnung 12 hinaus mit der Zugkraft F ermöglicht das Einstellen des Nullspalts und ein Anpressen des Ableiters 20 gegen die Polkappe 10, wodurch beispielsweise ein zuverlässiges Verschweißen der beiden Komponenten 10, 20 sichergestellt wird. Dieser Schritt ist in der Fig. 8c gezeigt. Nach dem Verschweißen des Ableiters 20 mit der Polkappe 10 kann der Zugdorn 30 entlang der Rotationsachse R weitergedreht oder zurückgedreht werden, um eine mit der Öffnung 12 fluchtende Ausrichtung des Mitnehmers 35 zu erzielen und ein Entfernen des Zugdorns 30 aus der elektrochemischen Zelle 100 zu ermöglichen.

## Patentansprüche

1. Verfahren zum Verbinden von einem Ableiter (20) mit einer Innenseite (11) einer Polkappe (10) einer elektrochemischen Zelle (100), wobei ein endseitig spreizbarer Zugdorn (30) durch eine Öffnung (12, 12') der Polkappe (10) und durch eine korrespondierende Öffnung (23) oder Vertiefung (24) des Ableiters (20) hindurch geschoben wird, wobei der Zugdorn (30) dazu eingerichtet ist, im Bereich der Öffnung (23) oder der Vertiefung (24) des Ableiters (20) eine mechanische Verbindung zwischen dem Zugdorn (30) und dem Ableiter (20) auszubilden, wobei auf den Zugdorn (30) eine aus der Öffnung (12) der Polkappe (10) hinaus gerichtet Kraft (F) eingestellt wird und der Ableiter (20) gegen die Innenseite (11) der Polkappe (10) gepresst wird, wobei der gegen die Innenseite (11) der Polkappe (10) gepresste Ableiter (20) mit der Polkappe (10), insbesondere elektrisch leitend, verbunden wird, **dadurch gekennzeichnet, dass** die mechanische Verbindung zwischen dem Zugdorn (30) und dem Ableiter (20) durch eine rotatorische Bewegung und/oder eine translatorische Bewegung des Zugdorns (30) ausgebildet wird.

2. Verfahren nach Anspruch 1, wobei der Zugdorn (30) einen Aufnahmeabschnitt (34) und einen Mitnehmer (35) aufweist.

3. Verfahren nach einem der Ansprüche 1 oder 2, wobei der Ableiter (20) formschlüssig oder stoffschlüssig oder reibschlüssig mit der Polkappe (10) verbunden wird.

4. Verfahren nach einem der Ansprüche 1 bis 3, wobei die Polkappe (10) mindestens eine Verbindungsöffnung (12') aufweist, wobei durch die mindestens eine Verbindungsöffnung (12') eine Linienschweißung oder eine Lochschweißung oder eine Lötverbindung eingebracht wird, um eine stoffschlüssige Verbindung zwischen dem Ableiter (20) und der Polkappe (10) auszubilden.

5. Verfahren nach einem der Ansprüche 1 bis 4, wobei nach dem Verbinden des Ableiters (20) mit der Polkappe (10), der Zugdorn (30) aus der als Befüllöffnung ausgestalteten Öffnung (12) entfernt und die Öffnung (12) zum Befüllen eines Elektrolyts verwendet wird.

6. Verfahren nach Anspruch 5, wobei die als Befüllöffnung ausgestaltete Öffnung (12) nach dem Befüllen mit dem Elektrolyt fluiddicht verschlossen wird.

7. Verfahren nach einem der Ansprüche 1 bis 6, wobei der Zugdorn (30) endseitig im Bereich einer als Sackloch oder als Strangpress-Profil ausgestalteten Vertiefung (24) des Ableiters (20) gespreizt wird, um diesen mechanisch zu koppeln.

8. Verfahren nach einem der Ansprüche 1 bis 7, wobei der Ableiter (20) zumindest einen seitlichen Verbindungsabschnitt (25) aufweist, welcher im Wesentlichen mit einer Innenkontur der Polkappe (10), insbesondere im Bereich der Innenseite (11) korrespondiert, wobei der Ableiter (20) durch ein plastisches Verformen (42) der Polkappe (10) im Bereich des Verbindungsabschnitts (25) mit der Polkappe (10) verbunden wird.

9. Verfahren nach einem der Ansprüche 1 bis 8, wobei der Ableiter (20) durch eine Durchschweißung (40) durch die Polkappe (10) mit der Polkappe (10) zumindest bereichsweise verbunden wird.

## Claims

1. Method for connecting a arrester (20) to an inside (11) of a pole cap (10) of an electrochemical cell (100), wherein a pulling mandrel (30) that can be spread at its end is pushed through an opening (12, 12') in the pole cap (10) and through a corresponding opening (23) or recess (24) in the arrester (20), wherein the pulling mandrel (30) is configured to form, in the region of the opening (23) or recess (24) of the arrester (20) to form a mechanical connection between the pulling mandrel (30) and the arrester (20), wherein a force (F) directed out of the opening (12) of the pole cap (10) is applied to the arrester (30), and the arrester (20) is pressed against the inside (11) of the pole cap (10), wherein the arrester (20), which is pressed against the inside (11) of the pole cap (10), is connected to the pole cap (10), in particular electrically conductively, **characterized in that** the mechanical connection between the pulling mandrel (30) and the arrester (20) is formed by a rotational movement and/or a translational movement of the pulling mandrel (30).

2. Method according to claim 1, wherein the pulling mandrel (30) includes a receiving section (34) and a driver (35).

3. Method according to any one of claims 1 or 2, wherein the arrester (20) is connected to the pole cap (10) by a form-fitting, cohesive, or friction-fit.

4. Method according to any one of claims 1 through 3, wherein the pole cap (10) includes at least one connection opening (12'), wherein a seam weld, a spot weld, or a solder joint is formed through the at least one connection opening (12') to form a cohesive connection between the arrester (20) and the pole cap (10).

5. Method according to any one of claims 1 through 4, wherein, after connecting the arrester (20) to the pole cap (10), the pulling mandrel (30) is removed from the opening (12) configured as a filling opening, and the opening (12) is used for filling an electrolyte.

6. Method according to claim 5, wherein the opening (12), which is configured as a filling opening, is sealed in a fluid-tight manner after filling with the electrolyte.

7. Method according to any one of claims 1 through 6, wherein the pulling mandrel (30) is spread at its end in the region of a recess (24) of the arrester (20) configured as a blind hole or an extruded profile, in order to mechanically couple the arrester.

8. Method according to any one of claims 1 through 7, wherein the arrester (20) has at least one lateral connecting section (25) that substantially corresponds to an inner contour of the pole cap (10), particularly in the region of the inside (11), wherein the arrester (20) is connected to the pole cap (10) by plastically deforming (42) the pole cap (10) in the region of the connecting section (25).

9. Method according to any one of claims 1 through 8, wherein the arrester (20) is connected to the pole cap (10) at least in some areas by a through-weld (40) through the pole cap (10).

## Revendications

1. Procédé pour relier un collecteur de courant (20) à une face intérieure (11) d'un capuchon polaire (10) d'une cellule électrochimique (100), dans lequel
un mandrin de traction (30), apte à s'écarter à son extrémité, est poussé à travers une ouverture (12, 12') du capuchon polaire (10) et à travers une ouverture (23) ou cavité (24) correspondante du collecteur de courant (20), le mandrin de traction (30) étant agencé pour former, au niveau de l'ouverture (23) ou de la cavité (24) du collecteur de courant (20), une liaison mécanique entre le mandrin de traction (30) et le collecteur de courant (20),
une force (F) dirigée vers l'extérieur de l'ouverture (12) du capuchon polaire (10) est appliquée au mandrin de traction (30), et le collecteur de courant (20) est pressé contre la face intérieure (11) du capuchon polaire (10),
le collecteur de courant (20) pressé contre la face intérieure (11) du capuchon polaire (10) est relié au capuchon polaire (10), en particulier de manière électriquement conductrice,
**caractérisé en ce que** la liaison mécanique entre le mandrin de traction (30) et le collecteur de courant (20) est établie par un mouvement de rotation et/ou un mouvement de translation du mandrin de traction (30).

2. Procédé selon la revendication 1,
dans lequel le mandrin de traction (30) comporte une partie de réception (34) et un entraîneur (35).

3. Procédé selon l'une des revendications 1 ou 2,
dans lequel le collecteur de courant (20) est relié au capuchon polaire (10) par complémentarité de forme, par adhérence ou par frottement.

4. Procédé selon l'une des revendications 1 à 3,
dans lequel le capuchon polaire (10) présente au moins une ouverture de raccordement (12'), ladite au moins une ouverture de raccordement (12') permet de réaliser une soudure en ligne, une soudure en bouchon ou une liaison par brasage, afin de former une liaison par adhérence entre le collecteur de courant (20) et le capuchon polaire (10).

5. Procédé selon l'une des revendications 1 à 4,
dans lequel, après l'assemblage du collecteur de courant (20) avec le capuchon polaire (10), le mandrin de traction (30) est retiré de l'ouverture (12) conçue comme une ouverture de remplissage, et
l'ouverture (12) est utilisée pour le remplissage d'un électrolyte.

6. Procédé selon la revendication 5,
dans lequel l'ouverture (12) conçue comme une ouverture de remplissage est fermée de manière étanche aux fluides après le remplissage avec l'électrolyte.

7. Procédé selon l'une des revendications 1 à 6,
dans lequel le mandrin de traction (30) est écarté à son extrémité au niveau d'une cavité (24) du collecteur de courant (20), conçue sous forme de trou borgne ou de profilé extrudé, afin de le coupler mécaniquement.

8. Procédé selon l'une des revendications 1 à 7,
dans lequel le collecteur de courant (20) comporte au moins une partie de raccordement latérale (25) qui correspond sensiblement à un contour intérieur du capuchon polaire (10), en particulier au niveau de la face intérieure (11),
le collecteur de courant (20) est relié au capuchon polaire (10) par une déformation plastique (42) du capuchon polaire (10) au niveau de la partie de raccordement (25).

9. Procédé selon l'une des revendications 1 à 8,
dans lequel le collecteur de courant (20) est relié au moins localement au capuchon polaire (10) par une soudure traversante (40) à travers le capuchon polaire (10).
